# NEUE EUROPÄISCHE PATENTSCHRIFT

(11) **EP 1 502 784 B2**
(45) Veröffentlichungstag und Bekanntmachung des Hinweises auf die Entscheidung über den Einspruch: **15.09.2010**
(45) Hinweis auf die Patenterteilung: 05.09.2007
(21) Anmeldenummer: 03291944.1
(22) Anmeldetag: 31.07.2003
(51) Int. Cl.: B60H 1/22

(54) **Elektrische Heizvorrichtung**
Electric heating device
Dispositif de chauffage électrique

(43) Veröffentlichungstag der Anmeldung: 02.02.2005
(73) Patentinhaber: Behr France Rouffach SAS, 68250 Rouffach (FR); Nagares, S.A., 16200 Motilla del Palancar, Cuenca (ES)
(72) Erfinder: Brun, Michel, 68740 Rustenhart (FR); Schmittheisler, Christophe, 67680 Epfig (FR); Miss, Pascal, 67600 Selestat (FR); Mundel, Maxime, 68250 Pfaffenheim (FR); Mougey, Mathieu, 68190 Ensisheim (FR)
(74) Vertreter: Wallinger, Michael

(56) Entgegenhaltungen:
- EP-A- 0 901 311
- EP-A2- 0 901 311
- WO-A-02/057100
- DE-A- 19 911 547

## Beschreibung

Die vorliegende Erfindung betrifft eine Vorrichtung zum Austausch von Wärme und insbesondere eine elektrische Heizvorrichtung. Derartige Vorrichtungen zum Austausch von Wärme werden beispielsweise zum Beheizen von Luft in Kraftfahrzeugen verwendet.

Die vorliegende Erfindung wird nachfolgend am Beispiel einer elektrischen Heizvorrichtung zum Beheizen des Innenraums eines Kraftfahrzeuges beschrieben. Es sei jedoch darauf hingewiesen, dass die erfindungsgemäße Vorrichtung auch für andere Anwendungszwecke geeignet ist.

Eine solche elektrische Heizvorrichtung zum Beheizen der in den Innenraum eines Fahrzeugs geleiteten Luft weist elektrische Heizelemente und Wärmeleiter auf, an welchen die zu erwärmende Luft vorbeiströmt. Als elektrische Heizelemente werden vorzugsweise, aber nicht ausschließlich, keramische Heizelemente mit positiven Temperaturkoeffizienten (PTC-Heizelemente) verwendet. Es können jedoch auch andere Heizelemente, wie zum Beispiel Widerstands-Heizelemente, Plasma-Heizelemente und/oder dergleichen Anwendung finden.

Die von den Heizelementen abgegebene Wärme wird mittels Wärmeleitung, welche beispielsweise in Form von Wellrippen oder Lamellen ausgeführt sind, an die zu erwärmende Luft abgeführt.

Ferner ist es bekannt, die elektrische Verbindung der PTC-Elemente mit der jeweiligen Stromquelle durch Verwendung von Kontaktblechen zu erreichen. Die Heizelemente werden vorzugsweise in einer Aufnahmeeinrichtung gehalten.

Aus dem Stand der Technik sind ferner Vorrichtungen bekannt, bei welchen die Zuführung der elektrischen Energie an das Heizelement unter Verwendung eines elektrisch leitenden Rahmens durchgeführt wird. Dieser elektrisch leitende Rahmen stellt einen erhöhten Bauaufwand dar.

Aus der WO 02/057100 A2 ist eine Vorrichtung zum Austausch von Wärme nach dem Oberbegriff des Anspruchs 1 bekannt, in der Zuleitungen mittels klemmender Steckverbindungen mit einer Schaltungsträgerplatte verbunden sind.

Aufgabe der vorliegenden Erfindung ist die Bereitstellung einer Vorrichtung zum Austausch von Wärme, die so gestaltet ist, dass sowohl die Verbindung, der elektrischen Heizelemente mit der Spannungsquelle, die Steuerung und/oder Regelung der Heizelemente sowie die Wärmeleitung zwischen dem PTC-Element und der Luft in einfacher Weise bereitgestellt werden kann.

Die oben genannte Aufgabe wird durch eine Vorrichtung gemäß Anspruch 1 gelöst. Vorteilhafte Ausführungsformen und Weiterbildungen sind Gegenstand der Unteransprüche.

Die erfindungsgemäße Vorrichtung zum Austausch von Wärme weist eine Vielzahl von Wärmetauscherbaugruppen auf, wobei diese Wärmetauscher baugruppen wenigstens eine erste Komponente aufweisen, die mit einer elektrischen Stromquelle verbunden ist, und der deren Temperatur sich In Abhängigkeit eines durch die Komponente fließenden Stromes ändert. Daneben ist wenigstens eine zweite Komponente, mit wenigstens einer ersten und wenigstens einer zweiten Teileinheit vorgesehen, die mit den Polen einer Stromquelle verbunden sind, um einen Stromfluss durch die erste Komponente zu erzeugen. Schließlich ist wenigstens eine Verbindungseinrichtung vorgesehen, die mit wenigstens einer ersten oder wenigstens einer zweiten Teileinheit wenigstens einer Wärmetauscherbaugruppe in mechanisch lösbarer und elektrischer Verbindung steht. Bevorzugt steht die Verbindungseinrichtung mit mehreren, besonders bevorzugt mit allen, ersten oder zweiten Teileinheiten der einzelnen Wärmetauscherbaugruppen In mechanisch lösbarer und elektrischer Verbindung.

Dabei weist wenigstens eine Teileinheit ein erstes Verbindungsglied und die Verbindungseinrichtung eine Vielzahl von zweiten Verbindungsglledem auf, wobei wenigstens ein erstes und/oder ein zweites Verbindungsglied ein Element aufweist, welches wenigstens In ein zweites und/oder ein erstes Verbindungsglied eingreift.

Erfindungsgemäß ist ferner eine Steuer- und/oder Regeleinrichtung vorgesehen, welche den Stromfluss durch wenigstens eine erste Komponente im wesentlichen unabhängig von dem Stromfluss durch wenigstens eine weitere erste Komponente regelt.

Unter einem Verbindungsglied wird eine Einrichtung verstanden, die dazu geeignet ist, eine mechanische, nicht notwendigerweise dauerhafte, Verbindung mit einem weiteren Verbindungsglied einzugehen. Derartige Verbindungsglieder weisen erfindungsgemäß sich gegenseitig verhakende oder ineinander einrastende Elemente auf.

Unter einer Verbindungseinrichtung wird eine Einrichtung verstanden, die dazu geeignet ist, eine insbesondere elektrische Verbindung zwischen einzelnen, bevorzugt aber nicht ausschließlich mehreren Komponenten und einer Stromquelle herzustellen bzw. zu bewirken.

In einer bevorzugten Ausführungsform erstreckt sich die Verbindungseinrichtung in einem vorgegebenen Winkel α gegenüber der Längsrichtung der Teileinheiten. Bei den Teileinheiten kann es sich beispielsweise um Kontaktplatten handeln, die eine vorgegebene Länge und eine gegenüber dieser Länge deutlich verminderte Breite und deutlich verminderte Dicke aufweisen. Die Teileinheiten liegen dabei in einer bevorzugten Ausführungsform im wesentlichen parallel zueinander. Zwischen den Teileinheiten sind jeweils die ersten Komponenten angeordnet. Bevorzugt liegt der vorgegebene Winkel α zwischen 60° und 120°, bevorzugt zwischen 75° und 105° und besonders bevorzugt bei etwa 90°.

Erfindungsgemäß ist zwischen der ersten Komponente und wenigstens einer Teileinheit der zweiten Komponente eine Vielzahl von als Turbulenzeinrichtungen ausgebildetete Wärmeübertragungseinrichtungen angeordnet, die einen Wärmeaustausch mit einem umströmenden Medium fördern. Dabei handelt es sich bei dem umströmenden Medium bevorzugt um zu erwärmende Luft. Bei der Turbulenzeinrichtung kann es sich um Wellrippen mit oder ohne Lamellen und dergleichen handeln.

In einer weiteren bevorzugten Ausführungsform weist die erste Komponente wenigstens ein Heizelement mit positivem Temperaturkoeffizienten (PTC-Element) auf.

Bevorzugt ist die Vielzahl von ersten Teileinheiten und die Vielzahl von zweiten Teileinheiten alternierend, d. h. abwechseln angeordnet. Darunter ist zu verstehen, dass jeweils auf eine erste Teileinheit eine zweite Teileinheit folgt, und auf diese wieder eine erste Teileinheit usw.. Die unterschiedlichen Teileinheiten sind mit den Polen einer Spannungsquelle verbunden, so dass jeweils zwischen einer vorgegebenen Anzahl an Teileinheiten ein Stromfluss auftreten kann.

In einer weiteren bevorzugten Ausführungsform weist wenigstens das erste und/oder das zweite Verbindungsglied eine Einscchubhilfseinrichtung auf, die in das Element des zweiten und/oder des ersten Verbindungsglieds eingreift. Dabei kann es sich um einen Vorsprung oder eine Lasche handeln, welche in das Element eingeschoben werden. Diese Lasche kann in der bevorzugten Ausführungsform abgerundete Ecken oder Kanten aufweisen bzw. schräge Ecken oder Kanten, die bewirken, dass das Verbindungsglied leichter in ein Element eingeschoben werden kann (Einführungshilfe).

In einer weiteren bevorzugten Ausführungsform weist das Element wenigstens ein flexibles Kontaktelement auf. Unter einem flexiblen Kontaktelement wird ein Element verstanden, welches aus seiner Ausgangsposition elastisch verbogen oder verschoben werden kann. Bevorzugt wird das flexible Kontaktelement eine Kraft auf das zweite Verbindungsglied in Richtung seiner Ausgangsstellung ausüben.

In einer weiteren bevorzugten Ausführungsform weist wenigstens ein Verbindungsglied bzw. ein Element eine Ausnehmung auf. Dabei kann es sich beispielsweise um einen Schlitz oder dergleichen handeln.

In einer weiteren bevorzugten Ausführungsform weist die Verbindungseinrichtung wenigstens eine Öffnung auf. Diese Öffnung kann dabei beliebige geometrische Querschnitte, wie kreisförmige, polygonartige oder rechteckigförmige Querschnitte, aufweisen. Bevorzugt weist die Erfindung einen Querschnitt auf, dessen längere Seite die kürzere Seite übertrifft.

In einer weiteren bevorzugten Ausführungsform weist die Verbindungseinrichtung wenigstens eine Aussparung auf. Auch die Aussparung kann dabei beliebige geometrische Querschnitte der oben genannten Art aufweisen.

In einer weiteren bevorzugten Ausführungsform weist wenigstens eine erste Teileinheit oder wenigstens eine zweiten Teileinheit eine Isoliereinrichtung auf, mit welcher die erste oder die zweite Teileinheit gegenüber der Verbindungseinrichtung elektrisch isoliert wird. Dabei kann es sich bevorzugt um einen nicht elektrisch leitenden Kunststoff oder dergleichen handeln. Bevorzugt ist die erste oder die zweite Teileinheit derartig von der Isoliereinrichtung umgeben, dass ein elektrischer Kontakt mit der Verbindungseinrichtung im wesentlichen verhindert wird. Dabei kann beispielsweise der Kunststoff an die betreffende Teileinheit angespritzt werden.

In einer weiteren bevorzugten Ausführungsform weist die Verbindungseinrichtung eine Stromzuführungseinrichtung auf. Dabei ist die Verbindung zwischen der Verbindungseinrichtung und der Stromzuführungseinrichtung aus einer Gruppe von kraft-, form- und stoffschlüssigen Verbindungen ausgewählt, die z.B. Verschrauben, Verschweißen, Verkleben und dergleichen enthält.

In einer weiteren bevorzugten Ausführungsform ist wenigstens eine erste oder wenigstens eine zweite Teileinheit mit einer Steuer- und/oder Regeleinrichtung verbunden. Dabei kann mit der Einrichtung beispielsweise der durch die Heizvorrichtung fließende Strom gesteuert und/oder geregelt werden.

In einer weiteren bevorzugten Ausführungsform ist die Vorrichtung in einer Aufnahmeeinrichtung angeordnet. Dabei kann diese Aufnahmeeinrichtung beispielsweise Rahmenelemente aufweisen, die zur Stabilisierung der Vor richtung dienen. Bevorzugt besteht die Aufnahmeeinrichtung wenigstens teilweise aus einem elektrisch isolierendem Material, insbesondere aus einem elektrisch isolierendem Kunststoff, Komposit-Kunststoff oder einer Keramik.

In einer weiteren bevorzugten Ausführungsform sind Einrichtungen vorgesehen, die die erste Komponente und die zwischen einer Teileinheit der zweiten Komponente und der ersten Komponente liegenden Einrichtungen miteinander mechanisch verspannen. Allgemein handelt es sich dabei um Spanneinrichtungen wie eine Feder, welche eine Verspannung zwischen einzelnen oder allen Komponenten bewirken.

In einer weiteren bevorzugten Ausführungsform sind Stromleitkomponenten vorgesehen, zwischen welchen die erste Komponente angeordnet ist. Dabei kann es sich in einer bevorzugten Ausführungsform um Kontaktbleche handeln, die selbst nicht direkt mit einer Strom- bzw. Spannungsquelle verbunden werden und zwischen welchen die erste Komponente sandwichartig angeordnet ist. Es ist auch möglich, das bzw. die PTC-Elemente zwischen einer Stromteitkomponente und einer Teileinheit der zweiten Komponente anzuordnen. Diese Stromleitkomponenten dienen einerseits dazu, den Stromfluss zwischen den Teileinheiten und durch das PTC-Elemente hindurch zu ermöglichen, andererseits sind sie auch für die Übertragung der von den PTC-Elementen erzeugten Wärme geeignet.

In einer weiteren bevorzugten Ausführungsform ist eine zweite Verbindungseinrichtung vorgesehen, die mit wenigstens einer zweiten Teileinheit wenigstens einer Wärmetauscherbaugruppe in mechanisch lösbarer und elektrischer Verbindung steht. Bevorzugt steht diese zweite Verbindungseinrichtung mit mehreren, besonders bevorzugten mit einer vorgegebenen Anzahl an zweiten Teileinheiten der Wärmetauscherbaugruppen in mechanisch lösbarer und elektrischer Verbindung.

In einer weiteren bevorzugten Ausführungsform sind die Steuer und/oder Regeleinrichtungen, die den durch die Heizelemente fließenden Strom regeln, aus einer Gruppe von Einrichtungen ausgewählt, welche Halbleiter bauelemente wie insbesondere aber nicht ausschließlich Transistoren, Leistungstransistoren, mechanische und/oder elektronische Schalter und dergleichen aufweist.

In einer weiteren bevorzugten Ausführungsform sind die Stromsteuer- und/oder Stromregeleinrichtungen an einem Keramiksubstrat als Leiterplatte, welches auf einem Kühlkörper liegt, der aus einem Wärme-leitenden Material, wie insbesondere aber nicht ausschließlich Aluminium, hergestellt wird und der zur Abführung der bei den Stromsteuer- und/oder Stromregeleinrichtungen erzeugten Wärme dient, die bevorzugt durch die zu erwärmende stromende Luft erfolgt, angeordnet.

In einer weiteren bevorzugten Ausführungsform erfolgt die elektrische Verbindung zwischen der Leiterplatte (insbesondere dem Keramiksubstrat) und den Kontaktflächen (32) der Verbindungsglieder und/oder anderer zu verbindenen Elemente, mittels der Verdrahtung von wenigstens einem flexibelen elektrisch leitenden Draht, wie insbesondere aber nicht ausschließlich Wire Bonding.

In einer weiteren bevorzugten Ausführungsform ist wenigstens eine Stromanschlusseinrichtung vorgesehen, welche gegenüber der Vorrichtung drehbar ausgeführt ist. Dabei steht die Stromanschlusseinrichtung bevorzugt gelenkig in Berührung mit der Stromzuführungseinrichtung und kann somit gegenüber dieser gedreht werden.

Die Erfindung ist ferner auf eine Einrichtung zum Austausch von Wärme, insbesondere eine Klimaanlage für ein Kraftfahrzeug, gerichtet, bei welcher in wenigstens einem Strömungskanal dieser Klimaanlage wenigstens eine Vorrichtung zum Austausch von Wärme der oben beschriebenen Art angeordnet ist.

Weitere Vorteile und Anwendungsformen der vorliegenden Erfindung ergeben sich aus den beigefügten Zeichnungen.

Darin zeigen:
- Fig. 1: eine Explosionsansicht einer erfindungsgemäßen Vorrichtung zum Austausch von Wärme;
- Fig. 2: eine Teilansicht aus Fig. 1;
- Fig.3: erfindungsgemäße Vorrichtung zum Austausch von Wärme aus Gig. 1 im zusammengebauten Zustand;
- Fig. 4: eine Teilansicht aus Fig. 3;
- Fig. 5: eine erfindungsgemäße Vorrichtung zum Austausch von Wärme in einer weiteren Ausführungsform mit einer Steuer und/oder Re- geleinrichtung in einer Detaildarstellung;
- Fig. 6: eine Gesamtdarstellung der Detaildarstellung aus Fig. 5;
- Fig. 7: eine Verbindungseinrichtung; und
- Fig. 8: eine erfindungsgemäße Vorrichtung zum Austausch von Wärme in einer perspektivischen Darstellung;

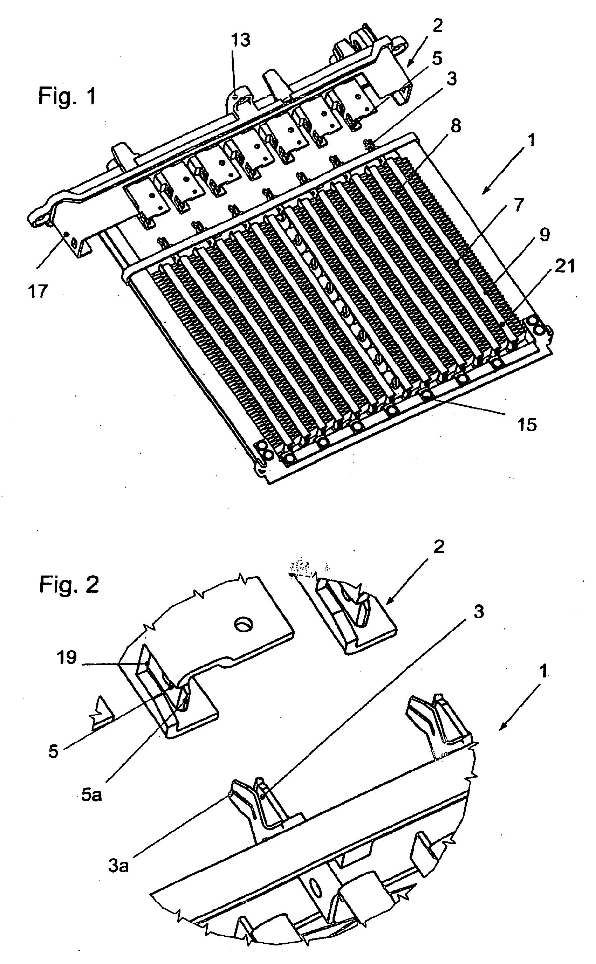

In Fig. 1 ist eine erfindungsgemäße Vorrichtung zum Austausch von Wärme in einer Explosionsansicht dargestellt. Das Bezugszeichen 1 bezieht sich auf einen Heizblock, der unter anderem Wellrippen 8, Kontaktbleche 7 und 9, bzw. Stromleitkomponenten sowie zwischen den Kontaktblechen angeordnete PTC-Elemente aufweist. Dabei weisen die Kontaktbleche 7 Laschen bzw. Verbindungsglieder 3 auf, die letztlich zum Anschließen an eine elektrische Stromquelle dienen. Die Kontaktbleche bzw. Stromleitkomponenten 9 hingegen weisen keine derartigen Laschen auf. Das Bezugszeichen 15 bezieht sich auf eine Rahmeneinrichtung, in welcher der Heizblock angeordnet ist. Bevorzugt ist die Rahmeneinrichtung aus nicht elektrisch leitendem Material hergestellt.

Das Bezugszeichen 2 kennzeichnet eine Verbindungseinrichtung, die beim Zusammenbau mit dem Heizblock 1 zusammengesteckt werden kann. Dabei bezieht sich dieses Bezugszeichen 5 auf ein zweites Verbindungsglied, welches mit dem ersten Verbindungsglied 3 ineinander greift. Das Bezugszeichen 13 kennzeichnet ein Halteelement, mit welchem die Verbindungseinrichtung 2 und somit die komplette Vorrichtung beispielsweise an der Karosserie eines Fahrzeugs angeschraubt werden kann. Das Bezugszeichen 17 bezieht sich auf ein äußeres Rahmenelement, welches der weiteren Versteifung dient.

In Fig. 2 ist eine Detailansicht aus Fig. 1 gezeigt. Darin bezieht sich das Bezugszeichen 5 wieder auf das zweite an der Verbindungseinrichtung angebrachte Verbindungsglied. Dabei kennzeichnet das Bezugszeichen 5a einen abgeschrägten Bereich, der ein Einschieben des Gliedes in das erste Verbindungsglied 3 erleichtert. Das erste Verbindungsglied 3 weist einen flexiblen Abschnitt 3a auf, der zum Einklemmen des zweiten Verbindungsgliedes 5 geeignet ist. Es könnten anstelle dessen jedoch auch zwei flexible Glieder 3a und 3b vorgesehen sein, sowie weitere aus dem Stand der Technik bekannte Einsteckmechanismen.

Das Bezugszeichen 19 kennzeichnet eine Ausnehmung, in welche der flexible Abschnitt 3a eingeschoben werden kann.

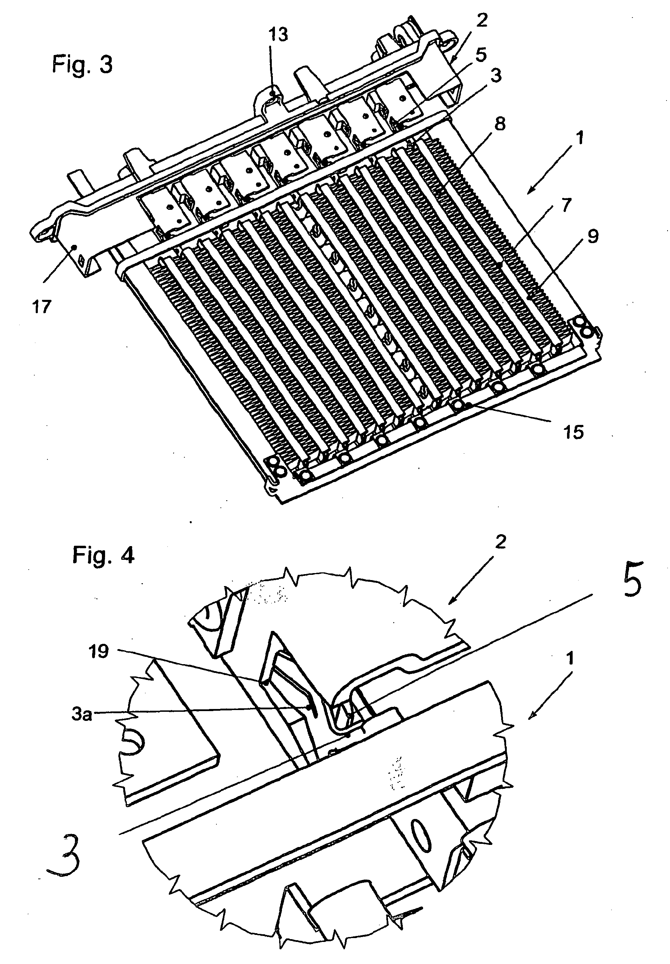

In Fig. 3 ist die Vorrichtung zum Austausch von Wärme aus Fig. 1 in zusammengebautem Zustand dargestellt.

Fig. 4 zeigt eine Ausschnittsdarstellung aus Fig. 3. Dabei ist zu sehen, auf welche Weise der Abschnitt 3a in die Ausnehmung 19 eingefügt wird und wie andererseits das zweite Verbindungsglied 5 in das erste Verbindungsglied 3 einrastet bzw. eingeschoben wird.

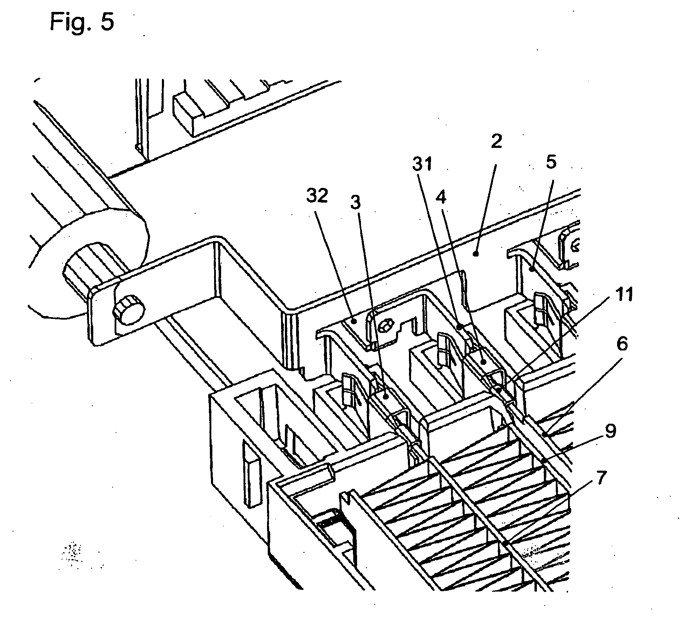

In Fig. 5 ist die erfindungsgemäße Vorrichtung zum Austausch von Wärme ausschnittsweise gezeigt, wobei die Kontaktierungen der ersten und zweiten Teileinheiten der zweiten Komponente dargestellt sind. Sowohl die erste Teileinheit 7 als auch die zweite Teileinheit 6 weisen Verbindungsglieder 3 und 4 auf. In die ersten Verbindungsglieder 3 greifen zweite Verbindungsglieder 5 ein, in die Verbindungsglieder 4 greifen zweite Verbindungsglieder 31 ein. Diese zweiten Verbindungsglieder 31 münden in Kontaktflächen 32.

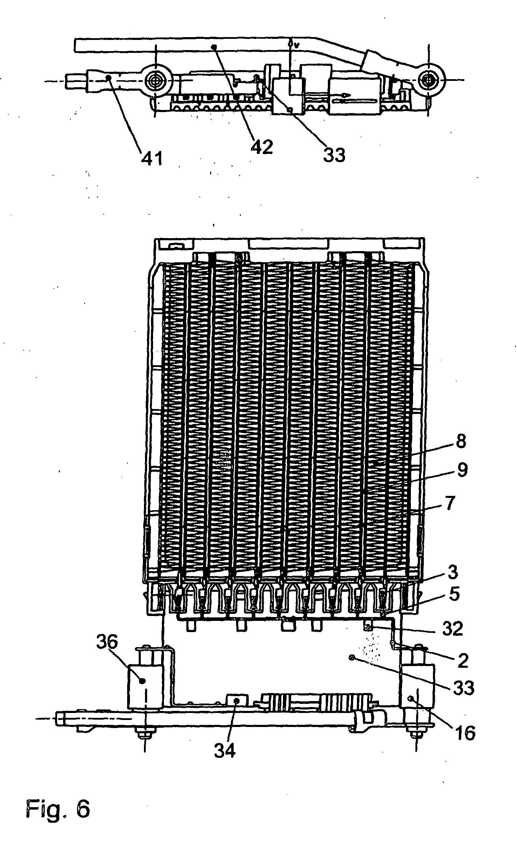

In Fig. 6 ist die erfindungsgemäße Vorrichtung zum Austausch von Wärme dargestellt. Dabei bezeichnen Bezugszeichen 3 und 5 wiederum die einzelnen Verbindungsglieder. Bei dieser Ausführungsform (vgl. auch Fig. 5) haben die Verbindungsglieder die gleiche Orientierung und liegen bevorzugt im wesentlichen in der gleichen Ebene. Es ist jedoch auch möglich, die Verbindungsglieder in anderer Weise, bezüglich einander anzuordnen, wie insbesondere aber nicht ausschließlich senkrecht zueinander.

Bezugszeichen 33 bezieht sich auf eine Leitungsplatine, auf der Elemente zur Regulierung der Stromzuführung an die einzelnen Teileinheiten angebracht sind, wie beispielsweise Transistoren, insbesondere Leistungstransistoren, Schalteinrichtungen, Widerstände und dergleichen.

Bezugszeichen 16 und 36 beziehen sich auf Stromzuführungseinrichtungen, welche der Zufuhr von Strom in die Vorrichtung zum Austausch von Wärme dienen. Die im oberen Teilbild gezeigten Stromanschlußeinrichtungen 41 und 42 werden mit den entgegengesetzten Polen einer Strom- bzw. Spannungsquelle verbunden. Bevorzugt können mittels der auf der Leitungsplatine 33 angebrachten Steuer- und/oder Regeleinrichtungen die einzelnen Wärmetauscherbaugruppen separat voneinander gesteuert und/oder geregelt werden. In Fig. 6 sind 8 derartige Wärmetauscherbaugruppen dargestellt. Es können jedoch auch mehrere oder weniger derartiger Baugruppen vorgesehen sein.

In einer bevorzugten Ausführungsform ist die Verbindungseinrichtung 2 mit der Masse (-) verbunden und die einzelnen Verbindungsglieder 31 mit dem Pluspol. Es ist jedoch auch umgekehrt denkbar, die Verbindungseinrichtung 2 mit dem Pluspol und Verbindungsglieder 3 mit dem Minuspol einer Strom- bzw. Spannungsquelle zu verbinden. Auch können die einzelnen Schalteinrichtungen bzw. die Schaltplatine mit dem Plus- oder dem Minuspol der Spannungsquelle verbunden sein.

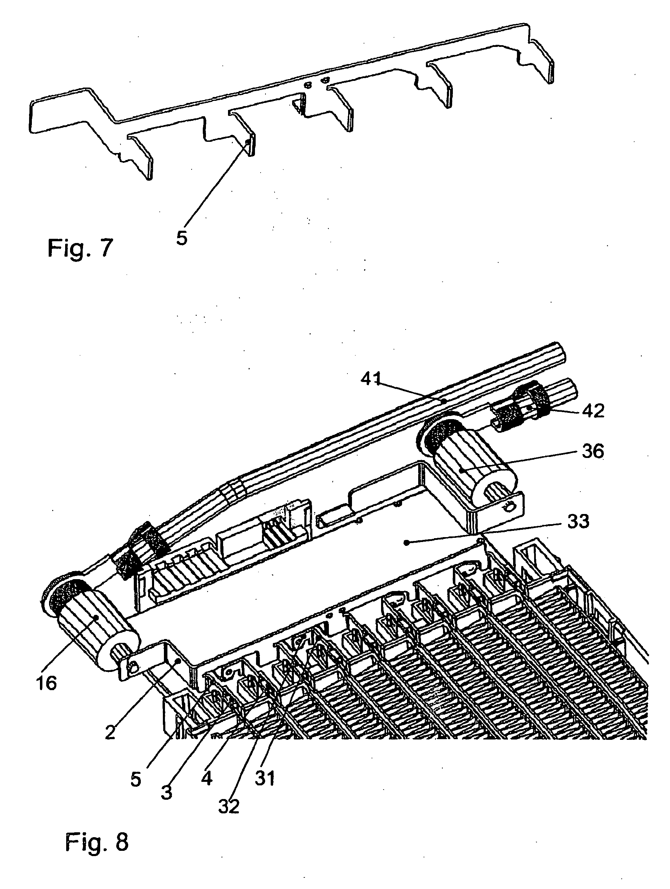

In Fig. 7 ist die Verbindungseinrichtung 2 der erfindungsgemäßen Vorrichtung zum Austausch von Wärme dieser Ausführungsform gezeigt. Dabei bezieht sich das Bezugszeichen 5 auf das Verbindungsglied, welches auch hier Schrägen aufweist, welche ein Einschieben in das Verbindungsglied 3 erleichtern.

Fig. 8 zeigt die erfindungsgemäße Vorrichtung zum Austausch von Wärme aus Fig. 6 in einer perspektivischen Darstellung. Die Verbindung zwischen dem Stromzuführungseinrichtungen 16 und 36 und den Führungseinrichtungen 41 und 42 kann gelenkig ausgelegt sein, so dass die Einrichtungen 41 und 42 gegenüber den Stromzuführungseinrichtungen 16 und 36 gedreht werden können.

## Patentansprüche

1. Vorrichtung zum Austausch von Wärme, insbesondere für ein Kraftfahrzeug, mit einer Vielzahl von Wärmetauscherbaugruppen, wobei diese Wärmetauscherbaugruppen
wenigstens eine erste Komponente (21), welche mit einer elektrischen Stromquelle verbunden ist und deren Temperatur sich in Abhängigkeit eines durch die Komponente fließenden Stromes ändert,
wenigstens eine zweite Komponente mit wenigstens einer ersten (7) und wenigstens einer zweiten (6) Teileinheit, die mit entgegengesetzten Polen einer Stromquelle verbunden sind, um einen Stromfluss durch die erste Komponente zu bewirken, und
wenigstens eine Verbindungseinrichtung (2), die mit wenigstens einer ersten oder wenigstens einer zweiten Teileinheit wenigstens einer Wärmetauscherbaugruppe in mechanisch lösbarer elektrisch leitender Verbindung steht, aufweisen,
wobei
wenigstens eine Teileinheit ein erstes Verbindungsglied (3) und die Verbindungseinrichtung eine Vielzahl von zweiten Verbindungsgliedern (5) aufweist, wobei wenigstens ein erstes und ein zweites Verbindungsglied ein Element aufweisen, in welches jeweils das andere Verbindungsglied eingreift und wenigstens eine Steuer- und/oder Regeleinrichtung vorgesehen ist, welche den Stromfluss durch wenigstens eine erste Komponente im wesentlichen unabhängig von dem Stromfluss durch wenigstens eine weitere erste Komponente steuert und/oder regelt;
**dadurch gekennzeichnet, dass**
zwischen der ersten Komponente (21) und wenigstens einer Teileinheit der zweiten Komponente eine Vielzahl von Turbulenzeinrichtungen angeordnet sind, die den Wärmeaustausch mit einem umströmenden Medium fördern, und dass die Elemente des Verbindungsglieder sich gegenseitig verhaken oder ineinander einrasten.

2. Vorrichtung nach Anspruch 1 **dadurch gekennzeichnet, dass** sich die Verbindungseinrichtung (2) in einem vorgegebenen Winkel α gegenüber der Längsrichtung der Teileinheiten erstreckt.

3. Vorrichtung nach Anspruch 2, **dadurch gekennzeichnet, dass** der vorgegebene Winkel α zwischen 60 und 120°, bevorzugt zwischen 75 und 105° und besonders bevorzugt bei etwa 90° liegt.

4. Vorrichtung nach wenigstens einem der vorangegangenen Ansprüche, **dadurch gekennzeichnet, dass** die erste Komponente (21) wenigstens ein Heizelement mit positivem Temperaturkoeffizienten (PTC-Element) aufweist.

5. Vorrichtung nach wenigstens einem der vorangegangenen Ansprüche, **dadurch gekennzeichnet, dass** die Vielzahl von ersten (7) Teileinheiten und die Vielzahl von zweiten (6) Teileinheiten alternierend angeordnet sind.

6. Vorrichtung, nach wenigstens einem der vorangegangenen Ansprüche, **dadurch gekennzeichnet, dass** wenigstens das erste oder das zweite Verbindungsglied (5) einen Vorsprung (5a) aufweist, der in das Element des jeweils anderen Verbindungsglieds eingreift.

7. Vorrichtung, nach wenigstens einem der vorangegangenen Ansprüche, **dadurch gekennzeichnet, dass** das Element des ersten Verbindungsglieds wenigstens ein flexibles Kontaktelement (3a) aufweist.

8. Vorrichtung nach wenigstens einem der vorangegangenen Ansprüche, **dadurch gekennzeichnet, dass** die Verbindungseinrichtung wenigstens eine Öffnung aufweist.

9. Vorrichtung nach wenigstens einem der vorangegangenen Ansprüche, **dadurch gekennzeichnet, dass** die Verbindungseinrichtung wenigstens eine Aussparung aufweist.

10. Vorrichtung nach Anspruch 9 oder 10, **dadurch gekennzeichnet, dass** wenigstens eine erste (7) oder wenigstens eine zweite (6) Komponenten durch die Öffnung und/oder die Aussparung geschoben wird.

11. Vorrichtung nach wenigstens einem der vorangegangenen Ansprüche, **dadurch gekennzeichnet, dass** wenigstens eine erste (7) Teileinheit oder wenigstens eine zweite (6) Teileinheit eine Isoliereinrichtung (11) aufweist, mit derdie erste oderdie zweite Teileinheit gegenüber der Verbindungseinrichtung elektrisch isoliert wird.

12. Vorrichtung nach wenigstens einem der vorangegangenen Ansprüche, **dadurch gekennzeichnet, dass** die Verbindungseinrichtung eine Stromzuführungseinrichtung (16) aufweist.

13. Vorrichtung nach wenigstens einem der vorangegangenen Ansprüche, **dadurch gekennzeichnet, dass** die Verbindung zwischen der Verbindungseinrichtung (2) und der Stromzuführungseinrichtung (16) aus einer Gruppe von stoff-, kraft-, oder formschlüssigen Verbindungen ausgewählt ist, welche Verschrauben, Verschweißen, Verkleben und dergleichen enthält.

14. Vorrichtung nach wenigstens einem der vorangegangenen Ansprüche, **dadurch gekennzeichnet, dass** wenigstens eine erste (7) oderwenigstens eine zweite (6) Teileinheit mit einer Steuer- und/oderRegeleinrichtung verbunden ist.

15. Vorrichtung zum Austausch von Wärme nach wenigstens einem der vorangegangenen Ansprüche, **dadurch gekennzeichnet, dass** die Vorrichtung in einer Aufnahmeeinrichtung (15) angeordnet ist.

16. Vorrichtung zum Austausch von Wärme nach Anspruch 16, **dadurch gekennzeichnet, dass** dieAufnahmeeinrichtung (15) wenigstens teilweise aus einem elektrisch isolierenden Material, insbesondere aus einem elektrisch isolierendem Kunststoff, Keramik oder Komposit-Kunststoff besteht.

17. Vorrichtung zum Austausch von Wärme nach wenigstens einem der vorangegangenen Ansprüche, **dadurch gekennzeichnet, dass** Einrichtungen vorgesehen sind, welche die erste Komponente (21) und die zwischen einer Teileinheit (6,7) der zweiten Komponente und der ersten Komponente liegenden Einrichtungen miteinander verspannen.

18. Vorrichtung nach wenigstens einem der vorangegangenen Ansprüche, **dadurch gekennzeichnet, dass** Stromleitkomponenten (9) vorgesehen sind, zwischen welchen die erste Komponente angeordnet ist,

19. Vorrichtung nach wenigstens einem der vorangegangenen Ansprüche, **dadurch gekennzeichnet, dass** eine zweite Verbindungseinrichtung vorgesehen ist, die mit wenigstens einer zweiten Teileinheit wenigstens einer Wärmetauscherbaugruppe in mechanisch lösbarer elektrischer Verbindung steht.

20. Vorrichtung nach wenigstens einem der vorangegangenen Ansprüche, **dadurch gekennzeichnet, dass** die Stromsteuer- und/oder Stromregeleinrichtungen aus einer Gruppe von Einrichtungen ausgewählt sind, welche Halbleiterbauelemente wie insbesondere aber nicht ausschließlich Transistoren, Leistungstransistoren mechanische und/oder elektronische Schalter und dergleichen aufweist.

21. Vorrichtung nach wenigstens einem der vorangegangenen Ansprüche, **dadurch gekennzeichnet, dass** die Stromsteuer- und/oder Stromregeleinrichtungen an einem Keramiksubstrat als Leiterplatte, welches auf einem Kühlkörper liegt, der aus einem Wärme-leitenden Material, wie insbesondere aber nicht ausschließlich Aluminium, hergestellt wird und der zur Abführung der bei den Stromsteuer- und/oder Regeleinrichtungen erzeugten Wärme dient, die bevorzugt durch die zu erwärmende stromende Luft erfolgt, angeordnet sind.

22. Vorrichtung nach wenigstens einem der vorangegangenen Ansprüche, **dadurch gekennzeichnet, dass** die elektrische Verbindung zwischen der Leiterplatte (insbesondere dem Keramiksubstrat) und den Kontaktflächen (32) der Verbindungsglieder und/oder anderer zu verbindenen Elemente, mittels der Verdrahtung von wenigstens eines flexiblen elektrisch leitenden Draht, wie insbesondere aber nicht ausschließlich Wire Bonding, erfolgt.

23. Vorrichtung nach wenigstens einem der vorangegangenen Ansprüche, **dadurch gekennzeichnet, dass** wenigstens eine Stromanschlusseinrichtung vorgesehen ist**,** welche gegenüber der Vorrichtung drehbar ausgeführt ist.

24. Einrichtung zum Austausch von Wärme, insbesondere Klimaanlage für ein Kraftfahrzeug, **dadurch gekennzeichnet, dass** an wenigstens einem Strömungskanal der Einrichtung wenigstens eine Vorrichtung zum Austausch von Wärme nach wenigstens einem der vorangegangenen Ansprüche angeordnet ist.

## Claims

1. Heat exchange device in particular for a motor vehicle, with a plurality of heat exchanger assemblies, whereas this heat exchanger assemblies comprise at least one first component (21), which is connected to an electric power source and whose temperature changes in dependence of a electric current which is running through the component, at least one second component with at least one first (7) and one second (6) partial unit, connected to opposite poles of an electric power source for effecting current flow through the first component and at least one connecting device (2), which is connected to at least one first or at least one second partial unit of at least one heat exchanger assembly mechanical releasable electric-conductive, whereas
at least one partial unit comprises a first connecting member (3) and the connecting device comprises a plurality of second connecting members (5), whereas at least one first and a second connecting member comprises one member, in which engages the respectively other
connecting member and at least one control device and/ or regulating device is provided which controls and/ or regulates the current flow through at least one first component substantially independent of the current flow through at least one further first component;
**characterized in that**
between the first component (21) and at least one partial unit of the second component a plurality of turbulence inserts are arranged, which enhance the heat exchange with an passing medium, and that
the members of the connecting members can mutually hook with each other or can snap into each other.

2. Device according to claim 1, **characterized in that**
the connecting device (2) extends in a predetermined angle α opposite to the longitudinal direction of the partial units.

3. Device according to claim 2, **characterized in that**
the value of the predetermined angle α is between 60° and 120°, preferably between 75° and 105° and particularly preferably about 90°.

4. Device according to at least one of the previous claims, **characterized in that** the first component (21) comprises at least one heating element with a positive temperature coefficient (PTC-element).

5. Device according to at least one of the previous claims, **characterized in that** the plurality of first (7) partial units und the plurality of second (7) partial units are arranged alternating.

6. Device according to at least one of the previous claims, **characterized in that** at least the first or the second connecting member (5) comprises a projection (5a) which engages in the member of the respectively other connecting member.

7. Device according to at least one of the previous claims, **characterized in that** the member of the first connecting member has at least one flexible contact member (3a).

8. Device according to at least one of the previous claims, **characterized in that** the connecting device has at least one opening.

9. Device according to at least one of the previous claims, **characterized in that** the connecting device has at least one recess.

10. Device according to claim 8 or 9, **characterized in that** at least one first (7) or at least one second component is shifted through the opening and/ or the recess.

11. Device according to at least one of the previous claims, **characterized in that** at least one first (7) partial unit or at least one second (6) partial unit has an insulation facility (11) which electrically isolates the first or the second partial unit to the connecting device.

12. Device according to at least one of the previous claims, **characterized in that** the connecting device has a current supply facility (16).

13. Device according to at least one of the previous claims, **characterized in that** the connection between the connecting device (2) and the current supply facility (16) is selected from a group of materialfit, force-fit or form-fit connections, which comprises screw closure, welding, bonding and suchlike.

14. Device according to at least one of the previous claims, **characterized in that** at least one first (7) partial unit or at least one second (6) partial unit is connected with a control and/ or regulating device.

15. Device according to at least one of the previous claims, **characterized in that** the device is arranged in a receiving device (15).

16. Device according to claim 15, **characterized in that**
the receiving device (15) consists at least partly of a electrical insulating material, in particular of electrical insulating plastics, ceramics or composite-plastics.

17. Device according to at least one of the previous claims, **characterized in that** facilities are provided which bias the first component (21) together with those facilities that are arranged between a partial unit (6, 7) of the second component und the first component.

18. Device according to at least one of the previous claims, **characterized in that** current-conductive components (9) are provided, between which the first component is arranged.

19. Device according to at least one of the previous claims, **characterized in that** a second connecting device is provided, which is mechanical releasable electric-conductive connected with at least one second partial unit of at least one heat exchanger assembly.

20. Device according to at least one of the previous claims, **characterized in that** the current-control and/ or current-regulating devices are selected from a group of devices, which comprises particularly but not exclusively transistors, power transistors, mechanical and/ or electrical switches and suchlike.

21. Device according to at least one of the previous claims, **characterized in that** the current-control and/ or current-regulating devices are arranged at an ceramics substrate as conductor board which, lies at a cooling element which is fabricated from an heat-conductive material like but not exclusively aluminium, and serves for dissipation of heat which is generated from the current-control and/ or current-regulating devices, which is preferably effected via the flowing air to be heated.

22. Device according to at least one of the previous claims, **characterized in that** the electrical connection between the conductor board (in particular the ceramics substrate) and the contacting surfaces (32) of the connecting members and/ or other members to be connected, is carried out via wiring of at least one flexible electric conductive wire, as in particular but not exclusively Wire Bonding.

23. Device according to at least one of the previous claims, **characterized in that** at least one currentconnecting device is provided, which is constructed rotatable relative to the device.

24. Heat exchange facility, in particular air conditioning system for a motor vehicle, **characterized in that**
at least at one flow channel of the facility is arranged at least one heat exchange device according to at least one of the previous claims.

## Revendications

1. Dispositif d'échange de chaleur, en particulier pour un véhicule automobile, comprenant une pluralité de groupes structurels échangeurs de chaleur, lesdits groupes structurels échangeurs de chaleur comprenant :
au moins un premier composant (21) qui est relié à une source de courant électrique et dont la température varie en fonction d'un courant qui s'écoule à travers le composant,
au moins un second composant qui comporte au moins une première unité partielle (7) et au moins une seconde unité partielle (6), lesquelles sont reliées aux pôles opposés d'une source de courant pour provoquer un flux de courant à travers le premier composant, et
au moins un moyen de liaison (2) qui est en liaison électroconductrice et détachable sur le plan mécanique avec au moins une première ou au moins une seconde unité partielle de l'un au moins des groupes structurels échangeurs de chaleur,
dans lequel
au moins une unité partielle comprend un premier organe de liaison (3) et le moyen de liaison comprend une pluralité de seconds organes de liaison (5), au moins un premier et un second organe de liaison comprenant un élément dans lequel s'engage l'autre organe de liaison, et
il est prévu au moins un moyen de commande et/ou de régulation qui commande et/ou régule le flux de courant à travers au moins un premier composant essentiellement indépendamment du flux de courant à travers au moins un autre premier composant;
**caractérisé en ce que** entre le premier composant (21) et au moins une unité partielle du second composant, sont agencés une pluralité de dispositifs à turbulences, qui favorisent l'échange de chaleur avec un fluide en écoulement et **en ce que** les éléments des organes de liaison s'accrochent mutuellement ou s'enclenchent les uns dans les autres.

2. Dispositif selon la revendication 1, **caractérisé en ce que** le moyen de liaison (2) s'étend sous un angle α prédéterminé par rapport à la direction longitudinale des unités partielles.

3. Dispositif selon la revendication 2, **caractérisé en ce que** l'angle α prédéterminé est entre 60 et 120°, de préférence entre 75 et 105°, et de façon particulièrement préférée d'environ 90°.

4. Dispositif selon l'une au moins des revendications précédentes, **caractérisé en ce que** le premier composant (21) comprend au moins un élément chauffant à coefficient de température positif (élément CTP).

5. Dispositif selon l'une au moins des revendications précédentes, **caractérisé en ce que** la pluralité de premières unités partielles (7) et la pluralité de secondes unités partielles (6) sont agencées en alternance.

6. Dispositif selon l'une au moins des revendications précédentes, **caractérisé en ce que** le premier ou le second organe de liaison (5) au moins comporte une saillie (5a) qui s'engage dans l'élément de l'autre organe de liaison.

7. Dispositif selon l'une au moins des revendications précédentes, **caractérisé en ce que** l'élément du premier organe de liaison comprend au moins un élément de contact flexible (3a).

8. Dispositif selon l'une au moins des revendications précédentes, **caractérisé en ce que** le moyen de liaison comprend au moins une ouverture.

9. Dispositif selon l'une au moins des revendications précédentes, **caractérisé en ce que** le moyen de liaison comprend au moins une échancrure.

10. Dispositif selon la revendication 8 ou 9, **caractérisé en ce qu'**au moins un premier (7) ou au moins un second (6) composant est passé à travers l'ouverture et/ou l'échancrure.

11. Dispositif selon l'une au moins des revendications précédentes, **caractérisé en ce qu'**au moins une première unité partielle (7) ou au moins une seconde unité partielle (6) comprend un moyen d'isolement (11) à l'aide duquel la première ou la seconde unité partielle est isolée électriquement vis-à-vis du moyen de liaison.

12. Dispositif selon l'une au moins des revendications précédentes, **caractérisé en ce que** le moyen de liaison comprend un moyen d'amenée de courant (16).

13. Dispositif selon l'une au moins des revendications précédentes, **caractérisé en ce que** la liaison entre le moyen de liaison (2) et le moyen d'amenée de courant (16) est choisie dans un groupe constitué des liaisons à assemblage de matières, à assemblage de forces ou à assemblage de formes, qui inclut le vissage, le soudage, le collage et similaires.

14. Dispositif selon l'une au moins des revendications précédentes, **caractérisé en ce qu'**au moins une première unité partielle (7) ou au moins une seconde unité partielle (6) est reliée à un dispositif de commande et/ou de régulation.

15. Dispositif d'échange de chaleur selon l'une au moins des revendications précédentes, **caractérisé en ce que** le dispositif est agencé dans un agencement de réception (15).

16. Dispositif d'échange de chaleur selon la revendication 15, **caractérisé en ce que** l'agencement de réception (15) est formé au moins partiellement en un matériau électriquement isolant, en particulier en matière plastique, en céramique ou en matière plastique composite électriquement isolante.

17. Dispositif d'échange de chaleur selon l'une au moins des revendications précédentes, **caractérisé en ce qu'**il est prévu des moyens qui serrent ensemble le premier composant (21) et les systèmes qui se trouvent entre une unité partielle (6, 7) du second composant et du premier composant.

18. Dispositif selon l'une au moins des revendications précédentes, **caractérisé en ce qu'**il est prévu des composants conducteurs de courant (9), entre lesquels est agencé le premier composant.

19. Dispositif selon l'une au moins des revendications précédentes, **caractérisé en ce qu'**il est prévu un second moyen de liaison qui est en liaison électrique et détachable sur le plan mécanique avec au moins une seconde unité partielle d'au moins un groupe structurel échangeur de chaleur.

20. Dispositif selon l'une au moins des revendications précédentes, **caractérisé en ce que** les moyens de commande et/ou de régulation de courant sont choisis dans un groupe de moyens qui incluent des composants semi-conducteurs, comme en particulier, mais non pas exclusivement, des transistors, des transistors de puissance, des commutateurs mécaniques et/ou électriques et similaires.

21. Dispositif selon l'une au moins des revendications précédentes, **caractérisé en ce que** les moyens de commande et/ou de régulation de courant sont agencés sur un substrat en céramique à titre de plaque à circuits, lequel est situé sur un corps refroidisseur produit en un matériau thermiquement conducteur, comme en particulier de l'aluminium, mais non pas exclusivement, et qui sert à évacuer la chaleur engendrée dans les moyens de commande et/ou de régulation de courant, ladite évacuation ayant de préférence lieu au moyen de l'air en écoulement à chauffer.

22. Dispositif selon l'une au moins des revendications précédentes, **caractérisé en ce que** la liaison électrique entre la plaque à circuits (en particulier le substrat en céramique) et les surfaces de contact (32) des organes de liaison et/ou d'autres éléments à relier, est effectuée au moyen du câblage d'au moins un fil électriquement conducteur flexible, comme en particulier, mais pas exclusivement, le Wire Bonding.

23. Dispositif selon l'une au moins des revendications précédentes, **caractérisé en ce qu'**il est prévu au moins un dispositif de raccordement de courant, réalisé rotatif par rapport au dispositif.

24. Système d'échange de chaleur, en particulier installation de climatisation pour un véhicule automobile, **caractérisé en ce que** dans au moins un canal d'écoulement du système est agencé au moins un dispositif d'échange de chaleur selon l'une au moins des revendications précédentes.
